# EUROPÄISCHE PATENTSCHRIFT

(11) **EP 4 069 997 B1**
(45) Veröffentlichungstag und Bekanntmachung des Hinweises auf die Patenterteilung: **18.10.2023**
(21) Anmeldenummer: 20800813.6
(22) Anmeldetag: 27.10.2020
(51) Int. Cl.: F16H 63/34, B21K 23/00

(54) **VERFAHREN ZUR HERSTELLUNG EINER SPERRKLINKE**
METHOD FOR PRODUCING A DETENT PAWL
PROCÉDÉ DE PRODUCTION D'UN CLIQUET D'ARRÊT

(30) Priorität: 05.12.2019 DE 102019218968
(43) Veröffentlichungstag der Anmeldung: 12.10.2022
(73) Patentinhaber: Feintool International Holding AG, 3250 Lyss (CH); ZF Friedrichshafen AG, 88046 Friedrichshafen (DE)
(72) Erfinder: KLEIN, Julia, 88046 Friedrichshafen (DE); MILLER, Tobias, 88046 Friedrichshafen (DE); MEYER, Martin, 88046 Friedrichshafen (DE); LIST, Matthias, 88046 Friedrichshafen (DE); FÜRER, Gilbert, 3272 Walperswil (CH); SCHLATTER, Ulrich, 3273 Kappelen (CH); SOLDATI, Marco, 3052 Zollikofen (CH)
(74) Vertreter: Cohausz Hannig Borkowski Wißgott
(86) Internationale Anmeldenummer: PCT/EP2020/080167
(87) Internationale Veröffentlichungsnummer: WO 2021/110327

(56) Entgegenhaltungen:
- EP-A1- 2 508 274
- DE-A1-102018 206 016
- US-A1- 2011 139 572

## Beschreibung

Die Erfindung betrifft ein Verfahren zur Herstellung einer Sperrklinke mit den Merkmalen des Oberbegriffs des Anspruchs 1.

Es sind Parksperrklinken bekannt, welche dazu geeignet sind, ein Fahrzeug in einem geparkten Zustand sicher zu halten, wobei die Parksperrklinke hierzu in ein sogenanntes Parksperrenrad formschlüssig eingreift und dieses gegen ein Verdrehen sichert. Zur Sicherung der Parksperrenklinke in einer Sperrstellung ist ein Sperrelement vorgesehen, welches zwischen der Parksperrenklinke und einer Führungsplatte verschiebbar ist und die Parksperrenklinke in dem Parksperrenrad hält.

Die Druckschrift DE 102018206016 A1, die wohl den nächstkommenden Stand der Technik bildet, offenbart eine Parksperre für ein Automatgetriebe in einem Kraftfahrzeug, umfassend eine auf einem Klinkenbolzen schwenkbar gelagerte Sperrklinke, die in ein mit dem Abtrieb des Automatgetriebes verbundenes Parksperrenrad ein- oder ausrastet, sowie ein auf einer Verbindungsstange zu einer Wählscheibe angeordnetes, über ein Federelement angefedertes Sperrelement, welches im gesperrten Zustand zwischen der Sperrklinke und einer Führungsplatte eingeklemmt ist, um ein Herausdrücken der Sperrklinke aus einer Zahnlücke des Parksperrenrades zu verhindern. Das dem Sperrelement abgewandte Ende der Verbindungsstange ist an der Wählscheibe angelenkt, die von einer Betätigungsvorrichtung beim Ein- und Auslegen der Parksperre verdreht wird. Vorgeschlagen wird, dass die Wählscheibe auf dem Klinkenbolzen drehbar gelagert ist und dass an der Wählscheibe eine Niederhaltefeder befestigt oder eingehängt ist, welche im ausgelegten Zustand der Parksperre ein Berühren der Sperrklinke an dem Parksperrenrad verhindert.

Die Erfindung hat sich zur Aufgabe gestellt, ein Verfahren der eingangs genannten Art zu schaffen, welches sich durch eine besonders einfache und schnelle Einbringung von unterschiedlichen Funktionsflächen an der Sperrklinke auszeichnet.

Diese Aufgabe wird erfindungsgemäß durch ein Verfahren mit den Merkmalen des Anspruchs 1 gelöst. Vorteilhafte Ausgestaltungen ergeben sich aus den Unteransprüchen, den Zeichnungen und/oder der Beschreibung.

Gegenstand der Erfindung ist ein Verfahren zur Herstellung einer Sperrklinke. Die Sperrklinke ist insbesondere für eine Parksperre eines Fahrzeugs ausgebildet und/oder geeignet und hat die Funktion eine Getriebewelle und/oder einen Antriebsstrang des Fahrzeugs zu sperren, um das Fahrzeug in einem geparkten Zustand gegen Wegrollen zu sichern. Vorzugsweise ist die Sperrklinke aus einem metallischen Werkstoff, insbesondere eine Stahllegierung, gefertigt ist.

Die Sperrklinke weist einen Rastabschnitt auf, welcher zum Eingriff in eine Sperrverzahnung ausgebildet und/oder geeignet ist. Insbesondere weist die Sperrverzahnung mehrere Zahnzwischenräume auf, wobei der Rastabschnitt formschlüssig in einen der Zahnzwischenräume eingreift und/oder eingreifbar ist. Bevorzugt ist der Rastabschnitt durch einen zu der Sperrverzahnung komplementären Rastzahn gebildet.

Die Sperrklinke weist einen Lagerabschnitt auf, welcher zur drehbaren Lagerung der Sperrklinke um eine Drehachse ausgebildet und/oder geeignet ist. Insbesondere dient der Lagerabschnitt zur Aufnahme eines Lagerbolzens, wobei die Sperrklinke auf dem Lagerbolzen drehbar gelagert werden kann. Vorzugsweise ist der Lagerabschnitt als eine zylindrische Bohrung, insbesondere Durchgangsbohrung, ausgebildet. Im Speziellen ist der Lagerabschnitt als ein sogenanntes Lagerauge ausgebildet. Bevorzugt ist ein Grundkörper der Sperrklinke als ein Hebelarm ausgebildet, der in einer Einbausituation ein gelagertes Ende und eine freies Ende umfasst, wobei der Lagerabschnitt an dem gelagerten Ende angeordnet ist.

Die Sperrklinge weist einen Verriegelungsabschnitt auf, welcher zur Anlage an einem längs der Sperrklinke verlagerbaren Sperrriegel ausgebildet und/oder geeignet ist. Insbesondere läuft der Sperrriegel an dem Verriegelungsabschnitt an, um die Sperrklinke um die Drehachse zu verschwenken. Hierzu ist der Verriegelungsabschnitt vorzugsweise rampenartig ausgebildet, um eine Linearbewegung des Sperrriegels in eine Rotationsbewegung der Sperrklinke um die Drehachse umzusetzen. Bevorzugt ist der Sperrriegel axial entlang einer Sperrriegelachse zwischen einer Freigabestellung und einer Sperrstellung verschiebbar, wobei die Sperrriegelachse, insbesondere in einer Projektion von oben, die Drehachse senkrecht schneidet und/oder achsparallel zu einer Längsachse der Sperrklinke angeordnet ist. In der Freigabestellung liegt der Verriegelungsabschnitt derart an dem Rastriegel an, sodass der Rastabschnitt und die Sperrverzahnung außer Eingriff stehen. In der Sperrstellung liegt der Verriegelungsabschnitt derart an dem Rastriegel an, sodass der Rastabschnitt mit der Sperrverzahnung in Eingriff steht. Der Sperrriegel ist vorzugsweise in Bezug auf die Sperrriegelachse rotationssymmetrisch ausgebildet. Insbesondere weist der Sperrriegel einen zylinderförmigen und/oder kegelförmigen Mantelabschnitt auf. Im Speziellen ist der Sperrriegel als ein Sperrkegel oder eine Sperrrolle ausgebildet.

Der Verriegelungsabschnitt ist auf einer dem Rastabschnitt abgewandten Seite der Sperrklinke angeordnet. Vorzugsweise ist der Verriegelungsabschnitt an dem freien Ende des Grundkörpers angeordnet. Beispielweise ist der Verriegelungsabschnitt in der Form einer Nase an den Grundkörper angeformt.

Im Rahmen der Erfindung wird vorgeschlagen, dass das Verfahren die folgenden Schritte umfasst:
- Bereitstellen eines Sperrklinkenrohlings;
- Bereitstellen eines Umformwerkzeugs mit einer Umformkontur, wobei die Umformkontur einen Lastabschnitt und einen Führungsabschnitt aufweist;
- Umformen des Sperrklinkenrohlings durch das Umformwerkzeug in einer Umformrichtung, wobei eine Vertiefung zur Aufnahme des Sperrriegels an dem Verriegelungsabschnitt erzeugt wird, wobei durch den Lastabschnitt ein Lastbereich der Vertiefung zur Abstützung des Sperrriegels in einer Sperrstellung definiert wird und wobei durch den Führungsabschnitt ein Führungsbereich der Vertiefung zur Führung des Sperrriegels bei einer Stellbewegung definiert wird.

Insbesondere weist der Sperrklinkenrohling eine endkonturnahe Form auf. Beispielsweise kann die endkonturnahe Form des Sperrklinkenrohlings durch ein Fertigungsverfahren, insbesondere ein Trennverfahren, z.B. Fräsen oder Schneiden, oder ein Urformverfahren, z.B. Sintern oder Gießen, gebildet werden. Bevorzugt findet die Bearbeitung durch das Umformwerkzeug ausschließlich an dem Verriegelungsabschnitt statt. Vorzugweise wird der Sperrklinkenrohling in einer Umformmaschine, vorzugsweise einer Presse, bearbeitet, wobei das Umformwerkzeug als ein Stempel ausgebildet ist. Beim Umformen wird das Umformwerkzeug in einer Hubbewegung in der Umformrichtung dem Sperrklinkenrohling, insbesondere dem Verriegelungsabschnitt, zugestellt und mit einer Umformkraft in das Material des Sperrklinkenrohlings eingedrückt. Besonders bevorzugt ist der Sperrklinkenrohling hierzu flach oder hochkant in der Umformmaschine angeordnet und/oder eingespannt und entgegen der Umformrichtung abgestützt. Dabei erfolgt das Einbringen des Lastbereichs und des Führungsbereichs vorzugsweise in nur einem Arbeitsschritt. Besonders bevorzugt erfolgt der Umformprozess jedoch so lange, bis eine festgelegte Umformtiefe erreicht ist und/oder das Umformwerkzeug sich in einer definierten Endlage befindet.

Der Vorteil der Erfindung besteht insbesondere darin, dass durch das gemeinsame Einbringen des Lastbereichs und des Führungsbereichs, eine Vertiefung in nur einem Arbeitsschritt erzeugt werden kann, welche unterschiedliche Funktionsflächen aufweist. Ein weiterer Vorteil des erfindungsgemäßen Verfahrens besteht insbesondere darin, dass die Vertiefung besonders einfach und schnell in den Verriegelungsabschnitt eingebracht werden kann. Zudem wird durch den Umformprozess ein Verfahren vorgeschlagen, welches besonders materialschonend ist.

In einer bevorzugten Ausgestaltung der Erfindung ist vorgesehen, dass der Verriegelungsabschnitt eine Anhebefläche und eine Freigangsfläche aufweist. Insbesondere dient die Anhebefläche zum Anlauf des Sperrriegels, um die Sperrklinke in die Sperrverzahnung ein- oder auszurasten. Hierzu weist die Anhebefläche eine Anhebeschräge auf und ist vorzugsweise als eine Rampe ausgebildet. Insbesondere weist die Freigangsfläche eine Freigangsschräge auf und ist vorzugsweise als ein Hinterschnitt ausgebildet. Die Anhebefläche und die Freigangsfläche sind vorzugsweise in einer Seitenansicht betrachtet winklig zueinander angeordnet und gemeinsam über einen Sperrradius miteinander verbunden. Die Anhebefläche und die Freigangsfläche erstrecken sich vorzugsweise senkrecht zu einer gemeinsamen Ebene, die bevorzugt durch eine Flachseite der Sperrklinke gebildet ist. Insbesondere erstreckt sich die Anhebefläche in einer ersten Ebene und die Freigangsfläche in einer zweiten Ebene, wobei die erste und die zweite Ebene die Längsachse und/oder die Sperrriegelachse winklig schneiden. Insbesondere ist der Sperrradius durch eine abgerundete Kante des Verriegelungsabschnitts gebildet.

Gemäß dieser Ausführung werden zur Bildung der Vertiefung der Lastbereich durch den Lastabschnitt an der Stelle des Sperrradius und der Führungsbereich durch den Führungsabschnitt an der Stelle der Anhebefläche eingebracht. Hierzu wird das Umformwerkzeug in der Umformrichtung derart dem Sperrklinkenrohling zugestellt, dass der Lastabschnitt an dem Sperrradius und der Führungsabschnitt an der Anhebefläche anliegt bzw. eingebracht wird. Zur Bildung des Lastbereichs wird der Sperrradius durch den Lastabschnitt in der Umformrichtung umgeformt, sodass eine Kontur erzeugt wird, welche den Sperrriegel in der Sperrstellung in dem Lastbereich zentriert. Zur Bildung des Führungsbereichs wird durch den Führungsabschnitt ein von der Anlauffläche zu dem Lastbereich hin verlaufender Einlauf erzeugt, über welchen der Sperrriegel bei der Stellbewegung geführt wird.

In einer weiteren Ausbildung ist vorgesehen, dass die Umformkontur einen Freigangsabschnitt aufweist. Insbesondere schließt sich der Freigangsabschnitt unmittelbar an den Lastabschnitt an. Zur Bildung der Vertiefung wird durch den Freigangsabschnitt zusätzlich ein Freigangsbereich für den Sperrriegel definiert, wobei der Freigangsbereich durch den Freigangsabschnitt in die Freigangsfläche eingebracht wird. Hierzu wird das Umformwerkzeug in der Umformrichtung derart dem Sperrklinkenrohling zugestellt, sodass das Umformwerkzeug zusätzlich mit dem Freigangsabschnitt an der Freigangsfläche anliegt bzw. in diese eingebracht wird. Zur Bildung des Freigangsbereichs wird durch den Freigangsabschnitt ein von dem Lastbereich zu der Freigangsfläche hin verlaufender Auslauf erzeugt, über welchen der Sperrriegel bei der Stellbewegung geführt wird.

In einer konkreten Umsetzung ist vorgesehen, dass die Umformkontur in einem Längsschnitt, insbesondere entlang der Längsachse, betrachtet einen stetigen Konturverlauf aufweist. Insbesondere ist unter einem "stetigen Konturverlauf", ein sich gleichmäßig und ohne Unterbrechungen erstreckender Verlauf zu verstehen. Optional kann vorgesehen sein, dass die Umformkontur im Längsschnitt betrachtet im Groben der Kontur des Verriegelungsabschnitts im Bereich der einzubringenden Vertiefung folgt und/oder sich an diese anschmiegt. Beim Umformen wird somit ein unterbrechungsfreier und/oder ein fließender Übergang zwischen dem Lastbereich und dem Führungsbereich und optional zwischen dem Lastbereich und dem Freigangsbereich erzeugt. Somit kann durch das Verfahren eine Vertiefung erzeugt werden, welche ein Verhaken des Sperrriegels verhindert und somit die Betriebssicherheit der Sperrklinke in einer Einbausituation erhöht.

In einer weiteren Umsetzung ist vorgesehen, dass der Lastabschnitt und der Führungsabschnitt und optional der Freigangsabschnitt in einem Querschnitt betrachtet einen gekrümmten Konturverlauf aufweisen. Insbesondere weisen der Lastabschnitt, der Führungsabschnitt und optional der Freigangsabschnitt einen stetig gekrümmten Konturverlauf auf. Vorzugsweise wird beim Umformen zumindest in dem Lastbereich eine Schmiegekontur durch den gekrümmten Konturverlauf erzeugt, welche dazu geeignet ist, sich an einen Außenumfang des Sperrriegels anzuschmiegen. Dabei ist vorgesehen, dass zumindest der Lastabschnitt und der Führungsabschnitt unterschiedliche Krümmungsradien aufweisen. Besonders bevorzugt weist der Führungsabschnitt einen größeren Krümmungsradius als der Lastabschnitt auf. Optional ist vorgesehen, dass der Freigangsabschnitt und der Lastabschnitt den gleichen oder einen unterschiedlichen Krümmungsradius aufweisen. Im Speziellen weist die Umformkontur, insbesondere der Lastabschnitt, einen von dem Freigangsabschnitt zu dem Führungsabschnitt hin zunehmenden Krümmungsradius auf.

In einer Weiterbildung ist vorgesehen, dass eine Schnittkontur des Sperrklinkenrohlings in einer Schneidstufe durch Schneiden in einer Schnittrichtung erzeugt wird. Insbesondere wird der Sperrklinkenrohling in der Schneidstufe mittels eines Schneidwerkzeugs aus einem Rohmaterial ausgeschnitten. In einer an die Schneidstufe anschließenden Umformstufe wird die Vertiefung durch Umformen in der Umformrichtung erzeugt. Dabei ist die Umformrichtung quergerichtet zu der Schnittrichtung oder gleichgerichtet zu der Schnittrichtung oder entgegengerichtet zu der Schnittrichtung. Insbesondere ist unter "quergerichtet" zu verstehen, dass die Umformrichtung und die Schnittrichtung senkrecht zueinander stehen. Dabei ist die Orientierung der Umformrichtung abhängig von der Lage bzw. Ausrichtung des Sperrklinkenrohlings in der Umformstufe. Bleibt der Sperrklinkenrohling beispielsweise bei einer Überführung von der Schneidstufe in die Umformstufe in seiner Lage unverändert, so ist die Umformrichtung quer zur Schnittrichtung gerichtet. Wird der Sperrklinkenrohling jedoch bei der Überführung von der Schneidstufe in die Umformstufe verkippt, so wird die Umformrichtung relativ zu der Schnittrichtung ebenfalls um diesen Betrag verkippt. Insbesondere kann der Sperrklinkenrohling bei der Überführung von der Schneidstufe in die Umformstufe um 90 Grad verkippt werden, wobei die Umformrichtung je nach Kipprichtung entgegen- oder gleichgerichtet zu der Schnittrichtung orientiert ist.

Bevorzugt werden der Lastbereich, der Führungsbereich und optional der Freigangsbereich derart in den Verriegelungsabschnitt eingeformt, sodass ein beim Umformen entstehender Materialaufwurf seitlich an dem Verriegelungsabschnitt gebildet wird. Hierzu kann der Sperrklinkenrohling in der Umformstufe bezüglich seiner Freiheitsgrade derart beschränkt werden, sodass die Aufwürfe ausschließlich oder zumindest größtenteils seitlich an dem Verriegelungsabschnitt erzeugt werden.

Optional kann vorgesehen sein, dass in der Schneidstufe ein Materialvorhalt zur Bildung eines verformbaren Aufmaßes für die in der Umformstufe gebildete Vertiefung erzeugt wird. Insbesondere wird der Materialvorhalt in einer Seitenansicht betrachtet durch ein gezieltes Übermaß an dem Verriegelungsabschnitt, insbesondere an dem Sperrradius, erzeugt. Durch das zusätzlich zur Verfügung verstehende Material kann somit eine Vergrößerung der Umformfläche erzeugt werden.

Alternativ kann vorgesehen sein, dass in der Schneidstufe ein Platzvorhalt zur Reduzierung eines in der Umformstufe gebildeten Materialaufwurfs erzeugt wird. Insbesondere wird der Platzvorhalt in einer Seitenansicht betrachtet durch ein gezieltes Untermaß an dem Verriegelungsabschnitt, insbesondere in einem Übergangsbereich von dem Lastbereich auf den Führungsbereich, erzeugt. Durch die Reduzierung des Materials in dem Übergangsbereich kann der beim Umformen entstehende Aufwurf in dem Übergangsbereich reduziert werden, sodass der Konturverlauf der Vertiefung begünstigt wird.

In einer konkreten Weiterbildung ist vorgesehen, dass die Schnittkontur in der Schneidstufe durch Feinschneiden erzeugt wird. Das Feinschneiden zeichnet sich insbesondere dadurch aus, dass das Rohmaterial während des Schneidprozess durch Ringzacken festgehalten wird. Bevorzugt ist, dass die Schneidstufe und die Umformstufe als unterschiedliche Schritte innerhalb des gleichen Arbeitsgangs durchgeführt werden.

Alternativ oder optional ergänzend ist vorgesehen, dass die Vertiefung in der Umformstufe durch Druckumformen erzeugt wird. Insbesondere entspricht das Druckumformen einem Verfahren nach DIN 8583. Bevorzugt wird die Vertiefung durch ein Eindrückverfahren mit geradliniger Bewegung in den Verriegelungsabschnitt eingebracht. Besonders bevorzugt wird die Vertiefung durch Einprägen oder Einsenken erzeugt.

In einer weiteren Konkretisierung ist vorgesehen, dass das Umformwerkzeug in einem Querschnitt betrachtet beidseitig einen abgeflachten und/oder abgesetzten Konturverlauf aufweist. Insbesondere kann dadurch ein Freibereich und/oder ein Absatz erzeugt werden, welcher sich seitlich an die Umformkontur anschließt, um einen zusätzlichen Platz für den beim Umformen generierten Materialaufwurf bereitzustellen und/oder um einen Materialfluss in einer gewünschten Richtung umzulenken. Bevorzugt wird der Materialaufwurf beim Umformen seitlich, insbesondere quer zur Längsachse, an dem Verriegelungsabschnitt gebildet.

In einer bevorzugten Ausführung ist vorgesehen, dass die Vertiefung in Bezug auf die Klinkenbreit partiell in den Verriegelungsabschnitt eingebracht wird. Vorzugsweise wird die Vertiefung in Bezug die Klinkenbreite mittig in den Verriegelungsabschnitt, insbesondere den Sperrradius, eingebracht. Insbesondere kann durch den gekrümmten Konturverlauf der Umformkontur eine Breite der Vertiefung in Abhängigkeit der Umformtiefe eingestellt werden, wobei mit zunehmender Umformtiefe die Breite der Vertiefung in Bezug auf die Klinkenbreite zunimmt.

In einer alternativen Ausführung ist vorgesehen, dass die Vertiefung über die gesamte Klinkenbreite in den Verriegelungsabschnitt eingebracht wird. Insbesondere weist die Umformkontur eine Breite auf, welche in einer Endlage größer oder gleich der Klinkenbreite ist. Besonders bevorzugt weist die Umformkontur bzw. die Vertiefung über die gesamte Klinkenbreite einen konstant gekrümmten Konturverlauf auf.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine schematische Darstellung einer Parksperre für ein Fahrzeug;
- Figur 2: eine schematische Darstellung einer Vorrichtung zur Herstellung einer Sperrklinke für die Parksperre gemäß Figur 1 als ein Ausführungsbeispiel der Erfindung;
- Figur 3: eine perspektivische Darstellung der Sperrklinke mit einem Umformwerkzeug der Vorrichtung aus Figur 2;
- Figur 4: eine schematische Detailansicht der Sperrklinke und des Umformwerkzeugs aus Figur 3 in einer alternativen Ausführung;
- Figur 5a,b: die Sperrklinke und das Umformwerkzeugs in gleicher Darstellung wie Figur 4 in einer alternativen Ausführung;
- Figur 6a,b,c: in einem schematischen Querschnitt das Umformwerkzeug in einer unterschiedlichen Ausführungen.

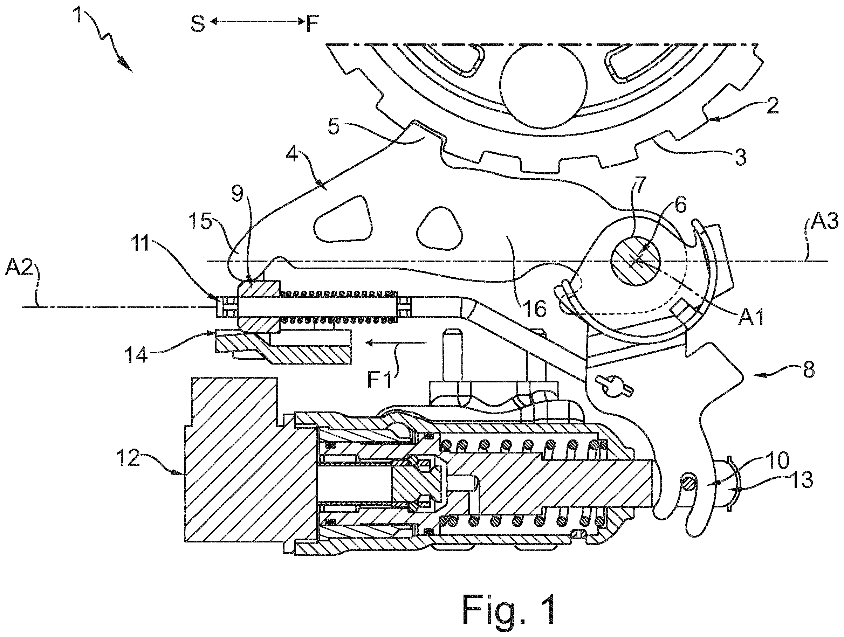

Figur 1 zeigt in einer schematischen Darstellung eine Parksperre 1 für ein Fahrzeuggetriebe oder einen Elektroantrieb eines Fahrzeugs, nicht dargestellt. Die Parksperre 1 dient dazu einen Abtrieb des Fahrzeuggetriebes bzw. des Elektroantriebs zu blockieren, um das Fahrzeug in einem abgestellten Zustand gegen ein Wegrollen zu sichern.

Hierzu weist die Parksperre 1 ein Parksperrenrad 2 auf, welches drehfest mit dem Abtrieb, insbesondere einer Getriebewelle, des Fahrzeuggetriebes bzw. des Elektroantriebs verbunden ist. Das Parksperrenrad 2 ist als ein Zahnrad ausgebildet und weist eine Sperrverzahnung 3 auf, welche durch eine am Außenumfang des Parksperrenrad 2 angeordnete Zahngeometrie gebildet ist. Zur Sperrung des Abtriebs weist die Parksperre 1 eine um eine Drehachse A1 verschwenkbare Sperrklinke 4 auf, welche mit der Sperrverzahnung 3 in Eingriff bringbar ist.

Die Sperrklinke 4 weist hierzu einen Rastabschnitt 5 auf, wobei der Rastabschnitt 5 in einem eingelegten Zustand der Parksperre 1 in eine Zahnlücke der Sperrverzahnung 3 eingreift, wie dargestellt, und in einem ausgelegten Zustand der Parksperre 1 mit der Sperrverzahnung 3 außer Eingriff ist. Der Rastabschnitt 5 ist als ein Klinkenzahn ausgebildet, welcher im eingelegten Zustand der Parksperre 1 formschlüssig in der Zahnlücke angeordnet ist.

Zur Lagerung der Sperrklinke 4 weist die Parksperre 1 einen Lagerbolzen 6 auf, wobei die Sperrklinke 4 an dem Lagerbolzen 6 drehbar gelagert angeordnet ist. Hierzu weist die Sperrklinke 4 einen Lagerabschnitt 7 auf, wobei der Lagerbolzen 6 zur Lagerung der Sperrklinke 4 durch den Lagerabschnitt 7 geführt ist. Beispielsweise ist der Lagerabschnitt 7 als eine zylindrische Durchgangsbohrung ausgebildet und definiert mit seiner Mittenachse die Drehachse A1.

Ferner umfasst die Parksperre 1 eine Schalthebelanordnung 8 und einen Sperrriegel 9, wobei die Schalthebelanordnung 8 zur Bewegung des Sperrriegels 9 entlang einer Sperrriegelachse A3 um die Drehachse A1 verschwenkbar ist. Die Schalthebelanordnung 8 weist einen Schalthebel 10 und eine Verbindungsstange 11 auf, wobei die Verbindungsstange 11 einerseits an dem Sperrhebel 10 gelenkig angeordnet und andererseits zur Aufnahme des Sperrriegels 9 dient. Der Sperrriegel 9 ist in axialer Richtung in Bezug auf die Sperrriegelachse A2 zwischen einer Freigabestellung F und einer Sperrstellung S beweglich auf der Verbindungsstange 11 angeordnet, wobei der Sperrriegel 9 in Richtung der Sperrstellung S mit einer Federkraft F1 beaufschlagt ist. Beispielsweise ist der Sperrriegel 9 hierzu über eine Druckfeder, insbesondere eine Schraubenfeder, in einer axialen Richtung an der Verbindungsstange 11 abgestützt.

Die Parksperre 1 weist einen Betätigungsaktuator 12 zur Erzeugung der Stellbewegung auf, wobei der Betätigungsaktuator 12 zur Übertragung der Stellbewegung mit dem Schalthebel 10 bewegungsgekoppelt ist. Beispielsweise ist der Betätigungsaktuator 12 hydraulisch betätigbar, wobei der Betätigungsaktuator 12 einen Betätigungskolben 13 aufweist, welcher bei einer Beaufschlagung durch einen Fluiddruck eine Hubbewegung ausführt und diese als die Stellbewegung auf den Schalthebel 10 überträgt. Dabei wird der Schalthebel 10 um die Drehachse A1 verdreht, wobei die rotierende Bewegung des Schalthebels 10 über die Verbindungsstange 11 in eine lineare Bewegung des Sperrriegels 9 entlang der Sperrriegelachse A2 umgewandelt wird.

Zur Führung des Sperrriegels 9 zwischen der Freigabestellung F und der Sperrstellung S weist die Parksperre 1 eine Führungseinrichtung 14 auf, welche bei der Umsetzung der Schaltbewegung stationär, beispielsweise an einem Gehäuse des Fahrzeuggetriebes bzw. des Elektroantriebs oder des Betätigungsaktuators 12, verbleibt. Die Führungseinrichtung 14 ist beispielsweise als eine Führungsplatte ausgebildet, welche eine von der Freigabestellung F in die Sperrstellung S ansteigende Rampe zur Führung des Sperrriegels 9 aufweist.

Ferner weist die Sperrklinke 4 einen Verriegelungsabschnitt 15 auf, welcher zur Anlage an dem Sperrriegel 9 in der Sperrstellung S und zum Anlauf des Sperrriegels 9 bei einer Umsetzung der Schaltbewegung dient. Die Sperrklinke 4 weist einen Grundkörper 16 auf, welcher in der Form eines Hebelarms ausgebildet ist, wobei der Grundkörper 16 in einer Einbausituation ein gelagertes Ende und ein freies Ende umfasst. Dabei ist der Lagerabschnitt 7 an dem gelagerten Ende und der Verriegelungsabschnitt 15 an dem freien Ende angeordnet. Der Grundkörper 14 definiert mit seiner Längserstreckung eine Längsachse A3, wobei der Sperrriegel 9 und die Schalthebelanordnung 8, insbesondere die Verbindungsstange 11, axial zur Längsachse A3 ausgerichtet sind.

Bei einer Bewegung des Sperrriegels 9 von der Freigabestellung F in die Sperrstellung S, läuft der Sperrriegel 9 in Längsrichtung an der Führungseinrichtung 14 und dem Verriegelungsabschnitt 15 an, wobei die Sperrklinke 4 mit dem Rastabschnitt 5 in die Sperrverzahnung 3 eingesteuert wird. Somit greift der Rastabschnitt 5 in der Sperrstellung S in die Sperrverzahnung 3 ein, sodass das Parksperrenrad 2 gegen Verdrehen blockiert ist. Zugleich ist der Sperrriegel 9 in der Sperrstellung S zwischen der Führungseinrichtung 14 und dem Verriegelungsabschnitt 15 eingeklemmt, sodass die Sperrklinke 4 gegen ein Herausdrücken aus der Sperrverzahnung 3 gesichert ist. Bei einer Bewegung des Sperrriegels 9 von der Sperrstellung S in die Freigabestellung F läuft der Sperrriegel 9 in umgekehrter Reihenfolge an der Führungseinrichtung 14 und dem Verriegelungsabschnitt 15 an, wobei die Sperrklinke 4 mit dem Rastabschnitt 5 aus der Sperrverzahnung 3 ausgesteuert wird. Somit steht der Rastabschnitt 5 in der Freigabestellung F mit der Sperrverzahnung 3 außer Eingriff, sodass das Parksperrenrad 2 verdrehbar ist.

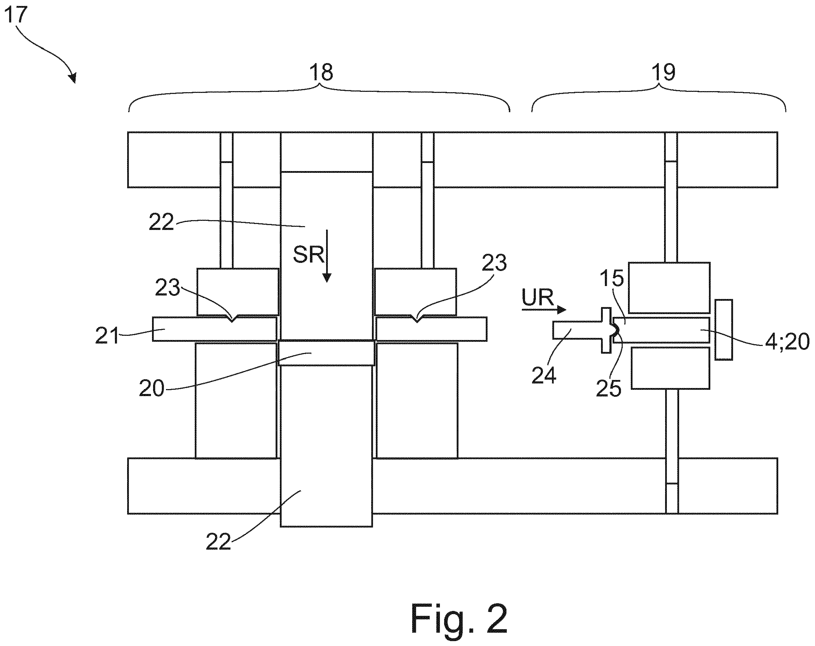

Figur 2 zeigt in einer stark schematisierten Darstellung eine Vorrichtung 17 zur Herstellung der Sperrklinke 4 als ein Ausführungsbeispiel der Erfindung. Die Vorrichtung 17 weist eine Schneidstufe 18 und eine Umformstufe 19 auf. Beispielsweise können die Schneidstufe 18 und die Umformstufe 19 gemeinsam über einen Querschieber, nicht dargestellt, miteinander gekoppelt sein. Die Schneidstufe 18 ist insbesondere eine Feinschneidstufe, wobei ein Sperrklinkenrohling 20 der Sperrklinke 4 hierzu aus einem Rohmaterial 21, z.B. ein Blechstreifen, in einer Schnittrichtung SR durch ein Schneidwerkzeug 22 geschnitten wird, wobei während des Schneidvorgangs das Rohmaterial 21 durch eine Ringzacke 23 gehalten wird. Der fertige Sperrklinkenrohling 20 weist vorzugsweise über seine gesamte Bauteillänge eine konstante Sperrklinkenbreite auf.

Anschließend wird der Sperrklinkenrohling 20, z.B. mittels des Querschiebers, von der Schneidstufe 18 in die Umformstufe 19 überführt. Die Umformstufe 19 umfasst ein Umformwerkzeug 24, wobei das Umformwerkzeug 24 den Sperrklinkenrohling 20 zur Bildung der Sperrklinke 4 in einer Umformrichtung UR umformt. Dabei wird eine Vertiefung 25 in der Umformrichtung UR durch das Umformwerkzeug 24 in den Verriegelungsabschnitt 15 eingebracht, wobei die Umformrichtung UR quer, insbesondere senkrecht, zur Schnittrichtung SR gerichtet ist. Das Umformwerkzeug 24 ist beispielsweise als ein Prägestempel ausgebildet. Zum Umformen wird das Umformwerkzeug 24 in der Umformrichtung UR dem Sperrklinkenrohling 20 zugestellt, wobei der Sperrklinkenrohling 20 fest in der Umformstufe 19 angeordnet und/oder fixiert ist. Dabei kann der Sperrklinkenrohling 20, insbesondere zumindest der Verriegelungsabschnitt 15 in der Umformstufe 19 entgegen der Umformrichtung UR abgestützt sein, sodass die auf den Sperrklinkenrohling 20 wirkenden Kräfte abgleitet werden können. Zudem kann der Sperrklinkenrohling 20 zwischen mehreren Klemmplatten eingeklemmt werden, um die Freiheitsgrade des Sperrklinkenrohlings 20 zu beschränken und einen durch das Umformen erzeugten Materialaufwurf zu steuern.

Durch die in den Verriegelungsabschnitt 15 eingebrachte Vertiefung 25, wird eine Aufnahme für den Sperrriegel 9 erzeugt, sodass dieser insbesondere in der Sperrstellung S lagestabil an dem Verriegelungsabschnitt 15 aufgenommen wird bzw. zentriert wird. Die Vertiefung 25 dient zudem zur Vergrößerung der Berührungsfläche zwischen dem Sperrriegel 9 und dem Verriegelungsabschnitt 15 unter Lasteinwirkung, wobei aufgrund der vergrößerten Berührungsfläche die Hertzsche Pressung und somit der Verschleiß von Sperrklinke 4 und Sperrriegel 9 deutlich reduziert werden kann.

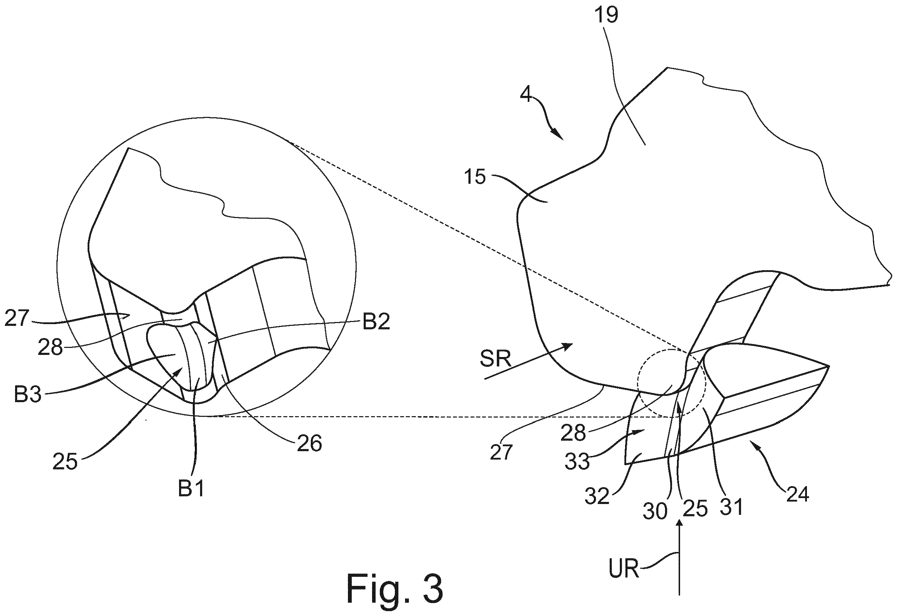

Figur 3 zeigt die Sperrklinke 4 mit dem Umformwerkzeug 24 der Umformstufe 19 aus Figur 2 in einer perspektivischen Darstellung. Der Verriegelungsabschnitt 15 weist eine Anhebefläche 26 und eine Freigangsfläche 27 auf, wobei die Anhebefläche 26 und die Freigangsfläche 27 in einer Seitenansicht betrachtet über einen Sperrradius 28 miteinander verbunden sind. Die Anhebefläche 26 und die Freigangsfläche 27 erstrecken sich dabei vorzugsweise senkrecht zu einer gemeinsamen Ebene, die bevorzugt durch eine Flachseite 29 des Verriegelungsabschnitts 15 gebildet ist. Die Anhebefläche 26 dient zum Anlauf des Sperrriegels 9 bei der Schaltbewegung und ist hierzu mit einer Anhebeschräge versehen, sodass durch die Anhebefläche 26 ein rampenartiger Anlauf für den Sperrriegel 9 gebildet wird. Beim Anlauf des Sperrriegels 9 an der Anhebefläche 26 wird somit bewirkt, dass eine axiale Bewegung des Sperrriegels 9 in eine Schwenkbewegung der Sperrklinke 4 um die Drehachse D, wie in Figur 1 gezeigt, umgesetzt wird. Die Freigangsfläche 27 ist mit einer Freigangsschräge versehen, sodass durch die Freigangsfläche 27 ein Hinterschnitt an dem Verriegelungsabschnitt 15 erzeugt ist.

Das Umformwerkzeug 24 weist einen Lastabschnitt 30, einen Führungsabschnitt 31 sowie einen Freigangsabschnitt 32 auf, welche zusammen eine Umformkontur 33 des Umformwerkzeugs 24 definieren. Zur Bildung der Vertiefung 25 wird das Umformwerkzeug 24 mit seiner Umformkontur 33 in der Umformrichtung UR in den Verriegelungsabschnitt 15 eingedrückt, wobei, wie in der Detailansicht D gezeigt, der Lastabschnitt 30 einen Lastbereich B1, der Führungsabschnitt 31 einen Führungsbereich B2 und der Freigangsabschnitt 32 einen Freigangsbereich B3 der Vertiefung 25 definiert. Dabei ist der Lastbereich B1 an der Stelle des Sperrradius 28 angeordnet, wobei sich der Führungsbereich B2 ausgehend von den Lastbereich B1 abschnittsweise in die Anhebefläche 26 erstreckt und wobei sich der Freigangsbereich B3 ausgehend von dem Lastbereich B1 abschnittsweise in die Freigangsfläche 27 erstreckt.

Bei einer Bewegung des Sperrriegels 9 von der Freigabestellung F in die Sperrstellung S läuft dieser über die Anhebefläche 26 in den Führungsbereich B2 der Vertiefung 25 ein und in dem Freigangsbereich B3 zumindest abschnittsweise aus der Vertiefung 25 aus. Dabei ist durch den Führungsbereich B2 ein Einlauf für den Sperrriegel 9 definiert, sodass der Sperrriegel 9 über den Führungsbereich B2 in den Lastbereich B1 geführt wird. Der Freigangsbereich B3 definiert einen Auslauf für den Sperrriegel 9, sodass der Sperrriegel 9 über den Freigangsbereich B3 aus dem Lastbereich B1 geführt wird. In der der Sperrstellung S ist der Sperrriegel 9 in dem Lastbereich B1 angeordnet, sodass sich der Verriegelungsabschnitt 15 in dem Lastbereich B1 an dem Sperrriegel 9 abstützt.

Die Umformkontur 33 weist in einem Querschnitt betrachtet einen stetig gekrümmten Konturverlauf auf, sodass die Vertiefung 25 beispielsweise mit einer Schmiegekontur versehen werden kann, welche sich an einen Außendurchmesser des Sperrriegels 9 anschmiegt. Beispielsweise kann vorgesehen sein, dass der Führungsabschnitt 31 gegenüber dem Lastabschnitt 30 und/oder dem Freigangsabschnitt 32 einen unterschiedlichen Krümmungsradius aufweist. Der Krümmungsradius des Führungsabschnitts 31 kann dabei größer gewählt werden als der Krümmungsradius des Lastabschnitts 30 und/oder des Freigansabschnitts 32. Beispielsweise weisen der Lastabschnitt 30 und der Freigansabschnitt 32 einen Radius von R8.5 und der Führungsabschnitt 31 einen Radius von R12 auf.

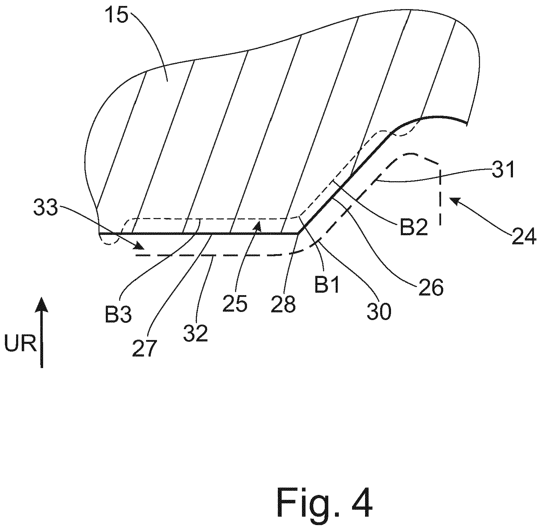

Figur 4 zeigt einen schematischen Längsschnitt, insbesondere entlang der Längsachse A3, des Verriegelungsabschnitts 15 und des Umformwerkzeugs 24 als ein weiteres Ausführungsbeispiel der Erfindung. In dem Längsschnitt betrachtet folgt die Umformkontur 33 im Groben der Kontur des Verriegelungsabschnitts 15. Dabei weist die Umformkontur 33 in dem Längsschnitt betrachtet einen Konturverlauf auf, welcher beim Umformen einen fließenden und/oder unterbrechungsfreien Übergang von dem Lastbereich B1 auf den Führungsbereich B2 und von dem Lastbereich B1 auf den Freigangsbereich B3 bildet. Somit kann sichergestellt werden, dass der Sperrkegel 9 bei der Durchführung der Schaltbewegung nicht verhaken kann.

In der gezeigten Darstellung ist der Führungsabschnitt 31 derart dimensioniert, sodass beim Umformen ein Führungsbereich B2 gebildet wird, welcher sich möglichst über die gesamte Anhebeschräge der Anhebefläche 26 erstreckt. Bevorzugt kann der Sperrriegel 9 somit beim Anlaufen an der Anhebefläche 26 während der Stellbewegung in dem Führungsbereich B2 geführt werden.

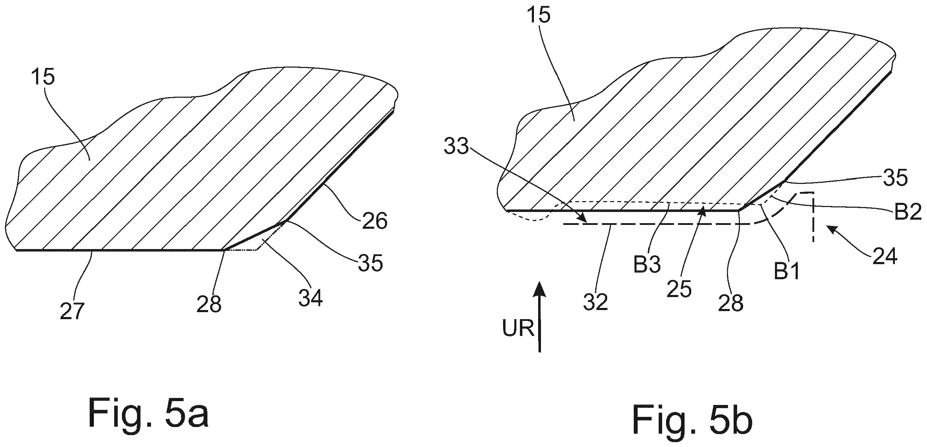

Die Figuren 5a, b zeigen jeweils einen schematischen Längsschnitt, insbesondere entlang der Längsachse A3, des Verriegelungsabschnitts 15 und des Umformwerkzeugs 24 als ein weiteres Ausführungsbeispiel der Erfindung. Wie der Figur 5a zu entnehmen, weist der Verriegelungsabschnitt 15 an der Stelle des Sperrradius 28 einen Platzvorhalt 34 auf, welcher durch einen Materialabtrag, insbesondere in der Schneidstufe 18 erzeugt wird. Dabei wird ein weiterer Radius 35 gebildet, welcher einen Übergang auf die Anhebefläche 26 definiert. Durch Umformen des Verriegelungsabschnitts 15, wie in Figur 5b dargestellt, wird der Lastbereich B1 zwischen dem Sperrradius 28 und dem weiteren Radius 35 gebildet. Durch den Platzvorhalt 34 kann dabei ein Materialaufwurf am Übergang auf die Anhebeschräge 26 reduziert werden.

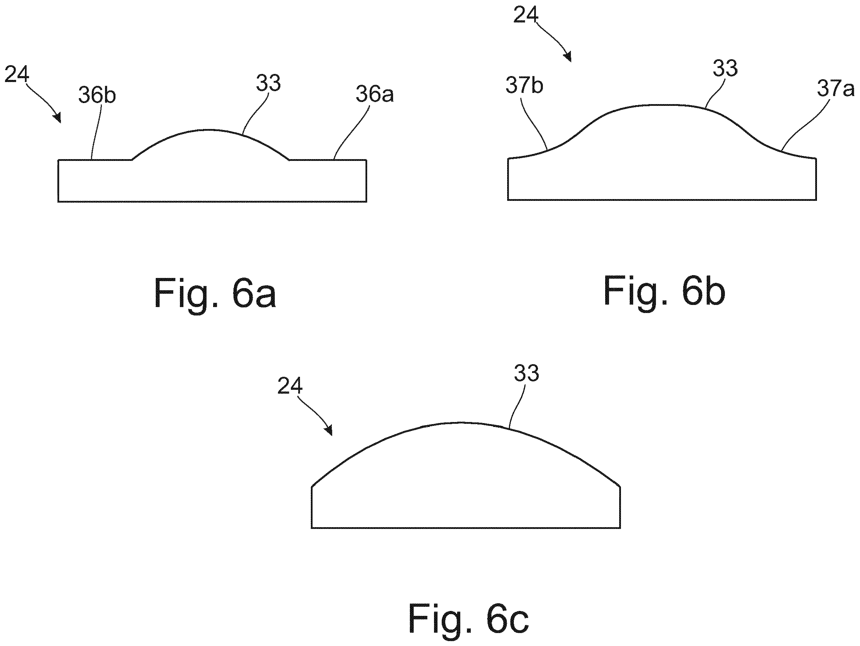

Die Figuren 6a, b, c zeigen jeweils einen schematischen Querschnitt des Umformwerkzeugs 24 als weiteres Ausführungsbeispiel der Erfindung. Das in Figur 6a gezeigte Umformwerkzeug 24 weist seitlich einen abgesetzten Konturverlauf auf, wobei die dadurch gebildeten seitlichen Absätze 36a, b eine Endlage für des Umformwerkzeugs 24 definieren. Beim Umformen wird das Umformwerkzeug 24 dabei soweit in der Umformrichtung UR in den Verriegelungsabschnitt 15 eingedrückt bis das Umformwerkzeug 24 mit den seitlichen Absätzen 36a, b an dem Verriegelungsabschnitt 15, insbesondere dem Sperrradius 28, anliegen. Zudem kann durch die Absätze 36a, b eine Umformtiefe festgelegt werden, wobei beim Umformen die Umformtiefe erreicht ist, wenn das Umformwerkzeug 24 mit den Absätzen 36a, b an dem Verriegelungsabschnitt 15 anliegt.

Das in Figur 6b gezeigte Umformwerkzeug 24 weist einen seitlich abgeflachten Konturverlauf auf, wobei die dadurch gebildeten seitlichen Freibereiche 37a, b eine Endlage für des Umformwerkzeugs 24 definieren. Zusätzlich dienen die Freibereiche 37a, b dazu, um einen zusätzlichen Platz für den beim Umformen erzeugten Materialaufwurf zu gewährleisten. Zudem kann durch den Freibereich 37a, b beispielsweise eine Umformtiefe festgelegt werden, wobei beim Umformen die Umformtiefe erreicht ist, wenn das Umformwerkzeug 24 mit dem Freibereich 37a, b an dem Verriegelungsabschnitt 15 anliegt.

Das in Figur 6c gezeigte Umformwerkzeug 24 weist einen stetig gekrümmten Konturverlauf auf. Beispielsweise weist das Umformwerkzeug 24 eine Werkzeugbreite auf, welche größer oder gleich der Klinkenbreite ist. Somit kann eine Vertiefung 25 erzeugt werden, welche sich über die gesamte Klinkenbreite erstreckt.

### Bezugszeichen

- 1: Parksperre
- 2: Parksperrenrad
- 3: Sperrverzahnung
- 4: Sperrklinke
- 5: Rastabschnitt
- 6: Lagerbolzen
- 7: Lagerabschnitt
- 8: Schalthebelanordnung
- 9: Sperrriegel
- 10: Schalthebel
- 11: Verbindungsstange
- 12: Betätigungsaktuator
- 13: Betätigungskolben
- 14: Führungseinrichtung
- 15: Verriegelungsabschnitt
- 16: Grundkörper
- 17: Vorrichtung
- 18: Schneidstufe
- 19: Umformstufe
- 20: Sperrklinkenrohling
- 21: Rohmaterial
- 22: Schneidwerkzeug
- 23: Ringzacke
- 24: Umformwerkzeug
- 25: Vertiefung
- 26: Anhebefläche
- 27: Freigangsfläche
- 28: Sperrradius
- 29: Flachseite
- 30: Lastabschnitt
- 31: Führungsabschnitt
- 32: Freigangsabschnitt
- 33: Umformkontur
- 34: Platzvorhalt
- 35: weiterer Radius
- 36a, b: Absatz
- 37a, b: Freibereich

- D: Detailansicht
- F: Freigabestellung
- S: Sperrstellung
- A1: Drehachse
- A2: Sperrriegelachse
- A3: Längsachse
- B1: Lastbereich
- B2: Führungsbereich
- B3: Freigangsbereich
- F1: Federkraft
- SR: Schnittrichtung
- UR: Umformrichtung

## Patentansprüche

1. Verfahren zur Herstellung einer Sperrklinke (4), insbesondere für eine Parksperre (1), mit einem Rastabschnitt (5) zum Eingriff in eine Sperrverzahnung (3), einem Lagerabschnitt (7) zur drehbaren Lagerung der Sperrklinke (4) um eine Drehachse (A1) und mit einem Verriegelungsabschnitt (15) zur Anlage an einem längs der Sperrklinke verlagerbaren Sperrriegel (9), **gekennzeichnet durch** die folgenden Schritte:
- Bereitstellen eines Sperrklinkenrohlings (20);
- Bereitstellen eines Umformwerkzeugs (24) mit einer Umformkontur (33), wobei die Umformkontur (33) einen Lastabschnitt (30) und einen Führungsabschnitt (31) aufweist;
- Umformen des Sperrklinkenrohlings (20) durch das Umformwerkzeug (24) in einer Umformrichtung (UR), wobei eine Vertiefung (25) zur Aufnahme des Sperrriegels (9) an dem Verriegelungsabschnitt (15) erzeugt wird, wobei durch den Lastabschnitt (30) ein Lastbereich (B1) der Vertiefung (25) zur Abstützung des Sperrriegels (9) in einer Sperrstellung (S) definiert wird und wobei durch den Führungsabschnitt (31) ein Führungsbereich (B2) der Vertiefung (25) zur Führung des Sperrriegels (9) bei einer Stellbewegung definiert wird.

2. Verfahren nach Anspruch 1, **dadurch gekennzeichnet, dass** der Verriegelungsabschnitt (15) eine Anhebefläche (26) und eine Freigangsfläche (27) aufweist, wobei die Anhebefläche (26) und die Freigangsfläche (27) über einen Sperrradius (28) miteinander verbunden sind, wobei der Lastbereich (B1) durch den Lastabschnitt (30) an der Stelle des Sperrradius (28) eingebracht wird und wobei der Führungsbereich (B2) durch den Führungsabschnitt (31) in die Anhebefläche (26) eingebracht wird.

3. Verfahren nach Anspruch 2, **dadurch gekennzeichnet, dass** die Umformkontur (33) einen Freigangsabschnitt (32) aufweist, wobei durch den Freigangsabschnitt (32) ein Freigangsbereich (B3) der Vertiefung (25) in die Freigangsfläche (27) eingebracht wird.

4. Verfahren nach einem der vorhergehenden Ansprüche, **dadurch gekennzeichnet, dass** die Umformkontur (33) in einem Längsschnitt betrachtet einen stetigen Konturverlauf aufweist, wobei beim Umformen unterbrechungsfreie und/oder fließende Übergang zwischen den einzelnen Bereichen (B1, B2, B3) erzeugt werden.

5. Verfahren nach einem der vorhergehenden Ansprüche, **dadurch gekennzeichnet, dass** die Umformkontur (33) in einem Querschnitt betrachtet einen gekrümmten Konturverlauf aufweist, wobei zumindest der Lastabschnitt (30) und der Führungsabschnitt (31) jeweils einen unterschiedlichen Krümmungsradius und/oder Krümmungsverlauf aufweisen.

6. Verfahren nach einem der vorhergehenden Ansprüche, **dadurch gekennzeichnet, dass** der Sperrklinkenrohling (20) in einer Schneidstufe (18) durch Schneiden in einer Schnittrichtung (SR) erzeugt wird und dass die Vertiefung (25) in einer Umformstufe (19) durch Umformen in der Umformrichtung (UR) erzeugt wird, wobei die Umformrichtung (UR) quer oder gleich oder entgegen der Schnittrichtung (SR) gerichtet ist.

7. Verfahren nach Anspruch 6, **dadurch gekennzeichnet, dass** der Sperrklinkenrohling (20) in der Schneidstufe (18) durch Feinschneiden erzeugt wird.

8. Verfahren nach Anspruch 6 oder 7, **dadurch gekennzeichnet, dass** die Vertiefung (25) in der Umformstufe (19) durch Druckumformen erzeugt wird.

9. Verfahren nach einem der vorhergehenden Ansprüche, **dadurch gekennzeichnet, dass** das Umformwerkzeug (24) zur Anlage an dem Sperrradius (28) in einem Querschnitt betrachtet beidseitig einen abgeflachten und/oder abgesetzten Konturverlauf aufweist.

10. Verfahren nach einem der vorhergehenden Ansprüche, **dadurch gekennzeichnet, dass** die Vertiefung (25) in Bezug auf eine Klinkenbreite partiell in den Verriegelungsabschnitt (15) eingebracht wird.

11. Verfahren nach einem der Ansprüche 1 bis 10, **dadurch gekennzeichnet, dass** die Vertiefung (25) in Bezug auf eine Klinkenbreite über die gesamte Klinkenbreite in den Verriegelungsabschnitt (15) eingebracht wird.

## Claims

1. Method for producing a detent pawl (4), in particular for a parking lock (1), having a latching portion (5) for engaging in a locking toothing (3), a bearing portion (7) for rotatably mounting the detent pawl (4) about an axis of rotation (A1), and having a locking portion (15) for contact with a locking catch (9) which is movable along the detent pawl, **characterized by** the following steps:
- providing a detent pawl blank (20);
- providing a forming tool (24) with a forming contour (33), wherein the forming contour (33) has a load portion (30) and a guide portion (31);
- forming the detent pawl blank (20) by the forming tool (24) in a forming direction (UR), wherein a depression (25) for receiving the locking catch (9) is produced on the locking portion (15), wherein the load portion (30) defines a load region (B1) of the depression (25) for supporting the locking catch (9) in a locking position (S), and wherein the guide portion (31) defines a guide region (B2) of the depression (25) for guiding the locking catch (9) during an actuating movement.

2. Method according to Claim 1, **characterized in that** the locking portion (15) has a lifting surface (26) and a free floating surface (27), wherein the lifting surface (26) and the free floating surface (27) are connected to each other via a locking radius (28), wherein the load region (B1) is introduced by the load portion (30) at the location of the locking radius (28), and wherein the guide region (B2) is introduced into the lifting surface (26) by the guide portion (31).

3. Method according to Claim 2, **characterized in that** the forming contour (33) has a free floating portion (32), wherein a free floating region (B3) of the depression (25) is introduced into the free floating surface (27) by the free floating portion (32).

4. Method according to one of the preceding claims, **characterized in that** the forming contour (33) has a continuous contour profile, as viewed in a longitudinal section, wherein a continuous and/or flowing transition between the individual regions (B1, B2, B3) is produced during the forming.

5. Method according to one of the preceding claims, **characterized in that** the forming contour (33) has a curved contour profile, as viewed in a cross section, wherein at least the load portion (30) and the guide portion (31) each have a different radius of curvature and/or curvature profile.

6. Method according to one of the preceding claims, **characterized in that** the detent pawl blank (20) is produced in a cutting step (18) by cutting in a cutting direction (SR), and **in that** the depression (25) is produced in a forming step (19) by forming in the forming direction (UR), wherein the forming direction (UR) is directed transversely or identically or counter to the cutting direction (SR).

7. Method according to Claim 6, **characterized in that** the detent pawl blank (20) is produced in the cutting step (18) by precision cutting.

8. Method according to Claim 6 or 7, **characterized in that** the depression (25) is produced in the forming step (19) by compression forming.

9. Method according to one of the preceding claims, **characterized in that** the forming tool (24) has a flattened and/or offset contour profile on both sides, as viewed in a cross section, for contact with the locking radius (28).

10. Method according to one of the preceding claims, **characterized in that**, with respect to a pawl width, the depression (25) is partially introduced into the locking portion (15).

11. Method according to one of Claims 1 to 10, **characterized in that**, with respect to a pawl width, the depression (25) is introduced over the entire pawl width into the locking portion (15).

## Revendications

1. Procédé de fabrication d'un cliquet d'arrêt (4), notamment pour un frein de stationnement (1), avec une section d'encliquetage (5) pour l'engagement dans une denture d'arrêt (3), une section de palier (7) pour le montage rotatif du cliquet d'arrêt (4) autour d'un axe de rotation (A1) et avec une section de verrouillage (15) pour l'appui sur un verrou d'arrêt (9) déplaçable le long du cliquet d'arrêt, **caractérisé par** les étapes suivantes :
- la fourniture d'une ébauche de cliquet d'arrêt (20) ;
- la fourniture d'un outil de formage (24) avec un contour de formage (33), le contour de formage (33) présentant une section de charge (30) et une section de guidage (31) ;
- le formage de l'ébauche de cliquet d'arrêt (20) par l'outil de formage (24) dans une direction de formage (UR), un évidement (25) destiné à recevoir le verrou d'arrêt (9) étant produit sur la section de verrouillage (15), la section de charge (30) définissant une zone de charge (B1) de l'évidement (25) pour soutenir le verrou d'arrêt (9) dans une position d'arrêt (S) et la section de guidage (31) définissant une zone de guidage (B2) de l'évidement (25) pour guider le verrou d'arrêt (9) lors d'un mouvement de réglage.

2. Procédé selon la revendication 1, **caractérisé en ce que** la section de verrouillage (15) présente une surface de soulèvement (26) et une surface de dégagement (27), la surface de soulèvement (26) et la surface de dégagement (27) étant reliées entre elles par un rayon d'arrêt (28), la zone de charge (B1) étant pratiquée par la section de charge (30) à l'emplacement du rayon d'arrêt (28) et la zone de guidage (B2) étant pratiquée par la section de guidage (31) dans la surface de soulèvement (26).

3. Procédé selon la revendication 2, **caractérisé en ce que** le contour de formage (33) présente une section de dégagement (32), une zone de dégagement (B3) de l'évidement (25) étant pratiquée dans la surface de dégagement (27) par la section de dégagement (32).

4. Procédé selon l'une quelconque des revendications précédentes, **caractérisé en ce que** le contour de formage (33), considéré dans une coupe longitudinale, présente une allure de contour continue, des transitions sans interruption et/ou fluides entre les zones individuelles (B1, B2, B3) étant produites lors du formage.

5. Procédé selon l'une quelconque des revendications précédentes, **caractérisé en ce que** le contour de formage (33), considéré dans une coupe transversale, présente une allure de contour curviligne, au moins la section de charge (30) et la section de guidage (31) présentant chacune un rayon de courbure et/ou une allure de courbure différents.

6. Procédé selon l'une quelconque des revendications précédentes, **caractérisé en ce que** l'ébauche de cliquet d'arrêt (20) est produite dans une étape de découpe (18) par découpe dans une direction de découpe (SR) et **en ce que** l'évidement (25) est produit dans une étape de formage (19) par formage dans la direction de formage (UR), la direction de formage (UR) étant transversale ou identique ou opposée à la direction de coupe (SR).

7. Procédé selon la revendication 6, **caractérisé en ce que** l'ébauche de cliquet d'arrêt (20) est produite par découpe fine dans l'étape de découpe (18).

8. Procédé selon la revendication 6 ou 7, **caractérisé en ce que** l'évidement (25) est produit dans l'étape de formage (19) par formage sous pression.

9. Procédé selon l'une quelconque des revendications précédentes, **caractérisé en ce que** l'outil de formage (24) pour l'appui sur le rayon d'arrêt (28) présente, considéré dans une coupe transversale, une allure de contour aplatie et/ou étagée des deux côtés.

10. Procédé selon l'une quelconque des revendications précédentes, **caractérisé en ce que**, par rapport à une largeur de cliquet, l'évidement (25) est pratiqué partiellement dans la section de verrouillage (15).

11. Procédé selon l'une quelconque des revendications 1 à 10, **caractérisé en ce que**, par rapport à une largeur de cliquet, l'évidement (25) est pratiqué dans la section de verrouillage (15) sur toute la largeur de cliquet.
